# EUROPÄISCHE PATENTSCHRIFT

(11) **EP 3 943 558 B1**
(45) Veröffentlichungstag und Bekanntmachung des Hinweises auf die Patenterteilung: **13.03.2024**
(21) Anmeldenummer: 20186726.4
(22) Anmeldetag: 20.07.2020
(51) Int. Cl.: C09D 5/24, C09D 7/61, H01B 1/24, H05B 3/26, C09D 5/44

(54) **LEITFÄHIGE BESCHICHTUNGSZUSAMMENSETZUNG UND HEIZUNGSSYSTEM**
CONDUCTIVE COATING COMPOSITION AND HEATING SYSTEM
COMPOSITION DE REVÊTEMENT CONDUCTEUR ET SYSTÈME DE CHAUFFAGE

(43) Veröffentlichungstag der Anmeldung: 26.01.2022
(73) Patentinhaber: TIC Technology Innovation Competence GmbH, 24226 Heikendorf (DE)
(72) Erfinder: VAN HATTUM, Edgar Johannes, 29303 Bergen (DE)
(74) Vertreter: Uexküll & Stolberg

(56) Entgegenhaltungen:
- CN-B- 105 161 696
- CN-B- 106 146 886
- DE-A1-102007 043 447
- GB-A- 1 473 947
- GB-A- 2 118 534
- JP-A- 2011 189 700
- RU-C1- 2 013 889
- EDUARDO RUIZ-HITZKY ET AL: "Clay-Graphene Nanoplatelets Functional Conducting Composites", ADVANCED FUNCTIONAL MATERIALS, Bd. 26, Nr. 41, 1. November 2016 (2016-11-01), Seiten 7394-7405, XP055757246, DE ISSN: 1616-301X, DOI: 10.1002/adfm.201603103

## Beschreibung

### GEBIET DER ERFINDUNG

Die vorliegende Erfindung betrifft eine leitfähige Beschichtungszusammensetzung (sogenannte Heizfarbe) mit hohem Wirkungsgrad, die zur effizienten Erzeugung von Wärme aus elektrischer Energie auf Substratoberflächen aufgebracht werden kann, sowie auf ein Verfahren zu deren Herstellung.

### HINTERGRUND DER ERFINDUNG

Die Beheizung der Oberfläche eines Substrats ist in unterschiedlichen Anwendungen erforderlich, wobei für die Beheizung von Räumen oft elektrische Wand- oder Bodenheizvorrichtungen, die beispielsweise mäanderförmige Heizdrähte aufweisen, oder wassergestützte Wand- oder Bodenheizvorrichtungen, in denen erwärmtes Wasser zirkuliert, eingesetzt werden. Auch die Verwendung einer leitfähigen Beschichtung, üblicherweise enthaltend ein oder mehrere leitfähige Zusatzstoffe, zur Anbringung auf Wänden oder Böden ist grundsätzlich bekannt.

Die DE 20 2019 105 756 U1 offenbart ein beheizbares, mehrschichtiges Verbundsystem, das insbesondere für Trockenbau geeignet ist, das eine (1.) Baustoffplatte, vorzugsweise Gipsplatte, z.B. Gipskartonplatte, Gipsfaserplatte, Spanplatte, Holzplatte, MDF-Platte, OSB-Platte, Hart-PVC-Platte, Polystyrolplatte, Bauplatte, z.B. Fliesenlegerplatte, Fliesenverlegeplatte, Thermoplatte, Thermopanel, Thermovlies, Innendämmplatte, Klimaplatte oder Acrylglas; (2.) eine leitfähige Beschichtung (Heizfarbe), die vorzugsweise mindestens ein Leitfähigkeitsadditiv, ausgewählt aus Leitfähigkeitsadditiven, die Graphit, Graphen und Ruß umfassen, und mindestens ein Bindemittel umfasst, wobei das Bindemittel ein elektrisch nicht leitfähiges Polymer oder ein anorganisches Bindemittel umfasst, wobei mehr bevorzugt die Heizfarbe mindestens zwei Leitfähigkeitsadditive, ausgewählt aus Leitfähigkeitsadditiven, die Graphit, Graphen und Ruß umfassen, umfasst und die Heizfarbe frei von elektrisch leitfähigen Carbonfasern und Kohlenstoff-Nanotubes ist, und ferner (3.) mindestens zwei elektrisch leitfähige Kontaktelemente, umfasst.

Eine ähnliche Heizfarbe wird in der DE 20 2016 106 096 U1 beschrieben. Diese umfasst mindestens zwei Leitfähigkeitsadditive und mindestens ein Bindemittel, wobei die Leitfähigkeitsadditive Graphit und/oder Ruß umfassen und das Bindemittel ein elektrisch nicht leitfähiges Polymer umfasst.

Graphit ist neben Diamant und Fulleren die dritte unter Normalbedingungen stabile Modifikation des Kohlenstoffs und kristallisiert meist im hexagonalen, seltener auch im rhomboedrischen Kristallsystem. Im kristallinen Graphit liegen parallel verlaufende ebene Schichten, die "Basalebenen" oder "Graphen-Schichten", vor. Eine Schicht besteht aus kovalent verknüpften Sechsecken, deren Kohlenstoff-Atome sp²-hybridisiert sind. Graphit besitzt entlang der Graphen-Schichten eine recht gute thermische und elektrische Leitfähigkeit. Die Leitfähigkeit entlang der Graphen-Schichten wird durch die Delokalisation der n-Elektronen ermöglicht. Orthogonal zu den Graphen-Schichten ist Graphit dagegen ein Isolator. Reale graphitische Kohlenstoffe weisen jedoch oft eine geringere Kristallinität mit unterschiedlich stark ausgeprägten Fehlordnungen auf. Diese reichen von einer turbostratischen Struktur, bei der noch eine überwiegend planare Ausrichtung der Kohlenstofflagen vorliegt, bis zu einer als amorph bezeichneten Struktur, in der die kristallinen Bereiche eine Größe von 10 nm nicht überschreiten.

Graphen besteht nur aus einer Lage solcher wabenförmig angeordneten Kohlenstoffatomschichten und kann durch mechanisches oder chemisches Exfolieren oder durch Delaminieren von Graphit, beispielsweise mittels Interkallation und Oxidation durch Schwefelsäure und anschließender reduktiver Entfunktionalisierung gewonnen werden. Sie hierzu beispielsweise K. Balasubramaninan et al. "Chemie des Graphens", Chemie in unserer Zeit, 2011, 45, Seiten 240 bis 249; oder S. Seiler et al. "Effect of friction on oxidative graphite intercalation and high-quality graphene formation", Nature Communications 2018, DOI: 10.1038/s41467-018-03211-1. Die Elektronen des Graphen haben als Ladungsträger eine herausragende Beweglichkeit. Das Material zeigt ungewöhnliche Quanten-Hall-Effekte und es handelt sich dabei auch um einen Halbleiter mit der Bandlücke 0, weshalb sich die Ladungsträger kontinuierlich zwischen Elektron und Loch verschieben lassen.

Nachteilig an den üblichen Heizfarben aus Leitfähigkeitsadditiven, die Graphit, Graphen und/oder Ruß in einem elektrisch nicht leitfähigen Bindemittel umfassen, ist deren vergleichsweise geringe Ausbeute bei Umwandlung von elektrischer in thermische Energie.

### ZUSAMMENFASSUNG DER ERFINDUNG

Aufgabe der vorliegenden Erfindung ist es daher ein Heizungssystem mit hohem Wirkungsgrad für Oberflächen und Räume sowie eine entsprechende leitfähige Beschichtungszusammensetzung (Heizfarbe) für Oberflächen sowie, insbesondere, ein Verfahren zu deren Herstellung zur Verfügung zu stellen.

Diese Aufgaben werden erfindungsgemäß durch den in dem unabhängigen Patentanspruch beschriebenen Gegenstand gelöst. Bevorzugte Ausführungsformen der Erfindung sind in den Unteransprüchen beschrieben.

Die Erfindung betrifft ein Verfahren zur Herstellung einer leitfähigen Zusammensetzung zur Erzeugung von Wärme aus elektrischer Energie (Heizfarbe), bei dem eine Mischung aus Graphit und einem Silikatsalz in einem wässrigen Lösungsmittel hergestellt wird, die Mischung zur Aktivierung der Oberfläche und Bildung einer Interkallationsverbindung durch Anlegen einer elektrischen Spannung elektrolysiert wird und das Reaktionsprodukt der Elektrolyse von der Reaktionslösung abgetrennt wird. Bevorzugt wird dabei Gleichstrom zugeführt.

Graphit wird bevorzugt in Form von Naturgraphitflocken verwendet. Die Partikelgröße (d50) des Graphits beträgt bevorzugt 1 µm bis 300 µm, bevorzugter 20 µm bis 250 µm und insbesondere 100 µm bis 200 µm. Die Bestimmung der Partikelgröße in dem Silikatsalz kann mittels Bildgebungsverfahren wie Elektronenmikroskop-Aufnahmen eines Querschnitts einer Probe erfolgen.

Als Silikatsalz können jegliche oben beschriebene wasserlöslichen Silikatsalze verwendet werden. Gemäß einer Ausführungsform der Erfindung beträgt das Gewichtsverhältnis von Graphit zu Silikat in der Mischung in dem wässrigen Lösungsmittel, bezogen auf den SiO₂-Gehalt des Silikats, 10:1 bis 1:2, bevorzugt 5:1 bis 1:1,5 und bevorzugter 2:1 bis 1:1. Gemäß einer weiteren Ausführungsform der Erfindung findet die Umsetzung in Gegenwart von einer Säure wie H₂SO₄ oder HNO₃ statt.

Die Elektrolyse kann potentiostatisch oder galvanostatisch durchgeführt werden. In einer Ausführungsform der Erfindung findet die Umsetzung unter Zufuhr einer Stromgesamtmenge von mindestens 200 mA·h/g, bezogen auf den Gewichtsgehalt an Graphit, bevorzugt im Bereich von 300 bis 600 mA·h/g, bezogen auf den Gewichtsgehalt an Graphit, statt.

Gemäß einer Ausführungsform der vorliegenden Erfindung wird die Elektrolyse potentiostatisch durchgeführt, d.h. bei einem konstanten elektrischen Potential, wobei das angewendete elektrische Potential dennoch stufenweise bei (a) der Aktivierung der Lösung und (b) zur Bildung der Interkallationsverbindung variiert werden kann. Das angewendete elektrische Potential liegt bevorzugt im Bereich von 1,0 V bis 3,0 V. Es ist bevorzugt, dass das angewendete elektrische Potential in Stufe (a) das angewendete elektrische Potential in Stufe (b) mindestens um das 1,1-fache übersteigt. In einer Ausführungsform der Erfindung beträgt das angewendete elektrische Potential in Stufe (a) 1,8 V und 3,0 V, bevorzugt 2,1 V bis 2,5 V und in Stufe (b) 1,0 bis 2,0 V, bevorzugt 1,6 bis 2,0 V, wobei das in Stufe (a) angewendete elektrische Potential das in Stufe (b) angewendete elektrische Potential mindestens um das 1,1-fache, vorzugsweise um das 1,1-fache bis 1,7-fache übersteigt. In einer anderen Ausführungsform der Erfindung beträgt das angewendete elektrische Potential in Stufe (a) 2,1 V bis 2,5 V und in Stufe (b) 1,5 bis 1,8 V. Die Dauer der Zufuhr elektrischen Stroms beträgt bevorzugt in Stufe (a) etwa 10 Sek. Bis etwa 600 Sek. und für Stufe (b) etwa 3 Min. bis etwa 60 Min. Bevorzugt wird Gleichstrom zugeführt.

Gemäß einer anderen Ausführungsform der vorliegenden Erfindung wird die Elektrolyse galvanostatisch durchgeführt, d.h. bei einer konstanten Stromstärke, wobei auch in diesem Fall die zugeführte Stromstärke dennoch stufenweise bei (a) der Aktivierung der Lösung und (b) zur Bildung der Interkallationsverbindung variiert werden kann. So ist es bevorzugt, dass die zugeführte Stromstärke in Stufe (a) die zugeführte Stromstärke in Stufe (b) mindestens um das 1,1-fache, vorzugsweise um das 1,1-fache bis 3,2-fache übersteigt. In einer Ausführungsform der Erfindung beträgt die zugeführte Stromstärke in Stufe (a) 300 bis 500 mA·h/g, bezogen auf den Gewichtsgehalt an Graphit, bei einem Potential von bis zu 2,5 V, und in Stufe (b) 100 bis 160 mA·h/g V, bei einem Potential von bis zu 2,3 bezogen auf den Gewichtsgehalt an Graphit. Bevorzugt wird Gleichstrom zugeführt.

Ohne an eine bestimmte Theorie gebunden sein zu wollen wird angenommen, dass sich bei der Zufuhr von elektrischer Energie in wässriger Lösung in einer ersten Stufe die Oberfläche der Graphitteilchen auflädt und darauf sauerstoffhaltige, funktionelle Gruppen, ähnlich wie beim Graphenoxid, gebildet werden, wobei die Graphitteilchen aktiviert werden. Diese ermöglichen die Interkallation von SiO₂ in Graphit in einer zweiten Stufe, wobei das Si des SiO₂ auch teilweise reduziert wird und sich elementares Silicium zwischen den Graphenschichten des Graphits einlagern kann, das verschiedene Graphenschichten miteinander verbindet. Weiterhin können sich bei der Zufuhr von elektrischer Energie an der Oberfläche der Graphitpartikel Phasen mit rhomboedrischer Gitterstruktur bilden, die sich ebenfalls als Cluster zwischen den Graphenschichten des Graphits einlagern können und auch verschiedene hexagonale Graphitkristalle miteinander verbinden. Es wurde beobachtet, dass die gebildeten Partikel eine außerordentliche Wärmeleistung bei Zufuhr von elektrischer Energie in orthogonaler Richtung zu den Graphen-Schichten aufweisen, die sich durch die Interkalation des Siliciums in den Graphitschichten und zum Teil auch durch Cluster rhomboedrischer Struktur zwischen den Graphenschichten erklären lassen könnte.

Das erfindungsgemäße Verfahren hat als Produkt eine leitfähige Beschichtungszusammensetzung, umfassend ein Silikatsalz und Partikel aus expandiertem Graphit, die in dem Silikatsalz dispergiert sind, wobei das Graphit in hexagonaler und/oder rhomboedrischer Kristallstruktur mit parallel verlaufenden Kristallgitterebenen vorliegt und zwischen den Kristallgitterebenen des Graphits Silicium eingelagert ist.

Die Auswahl der Silikatsalze ist nicht besonders eingeschränkt. Als Silikatsalz können jegliche wasserlöslichen Silikatsalze verwendet werden. Bevorzugt finden Lithium-, Natrium- und/oder Kaliumsilikate Verwendung, ganz besonders bevorzugt in Form von Wasserglas. Beispielhafte Silikatsalze sind Lithium-, Natrium- und/oder Kaliumwasserglas. Gemäß einer Ausführungsform der Erfindung beträgt das Gewichtsverhältnis von Graphit zu Silikat, bezogen auf den SiO₂-Gehalt des Silikats, 10:1 bis 1:2, bevorzugt 5:1 bis 1:1,5 und bevorzugter 2:1 bis 1:1.

Die Partikel aus expandiertem Graphit der erfindungsgemäß hergestellten Zusammensetzung liegen in Form von Lamallarpartikeln vor. Lamellarpartikel im Sinne dieser Erfindung sind Teilchen mit einem ausgeprägten Aspektverhältnis von etwa 10 bis etwa 500, bevorzugt von etwa 20 bis etwa 400. Unter dem Aspektverhältnis wird der Quotient der Länge und der Höhe des Plättchens verstanden.

Die erfindungsgemäß hergestellte leitfähige Beschichtungszusammensetzung kann als eine wässrige Suspension vorliegen, die zur Beschichtung auf einer Substratoberfläche vorgesehen ist. Ist die Suspension einmal getrocknet, z.B. nach Beschichtung auf einer Substratoberfläche, so ist sie hydrophob, d.h. wasserabweisend. Es hat sich gezeigt, dass die leitfähige Beschichtungszusammensetzung auch ohne den Zusatz von Haftvermittlern sehr gut auf Oberflächen haftet, insbesondere auf porösen Oberflächen, beispielsweise von Fliesen oder dergleichen. Die erfindungsgemäß hergestellte leitfähige Beschichtungszusammensetzung kann in getrockneter Form auf einer Substratoberfläche vorliegen. Geeignete Substrate sind beispielsweise Baustoffplatten, wie Gipsplatten, z.B. Gipskartonplatten, Gipsfaserplatten, Spanplatten, Holzplatten, MDF-Platten, OSB-Platten, Hart-PVC-Platten, Polystyrolplatten, Bauplatten, z.B. Fliesenlegerplatten, Fliesenverlegeplatten, Thermoplatten, Thermopaneele, Thermovliese, Innendämmplatten, Klimaplatten oder Acrylglas.

Die Beschichtungszusammensetzung kann aber weiterhin ein Matrixpolymer umfassen. Dies ist insbesondere bevorzugt, wenn die Haftung auf nichtporösen Oberflächen wie von Metallen verbessert werden soll.

Als Matrixpolymere, die auch als Binder bezeichnet werden, werden bevorzugt Thermoplaste oder Harze verwendet. Geeignete Polymere umfassen, sind jedoch nicht beschränkt auf: Polyamide wie Polyamid 6 oder Polyamid 12; Acrylpolymere wie Polybutylacrylat (PBA) oder Polyethylacrylat (PEA); und Epoxyharze. Zweck der Matrixpolymere ist es vornehmlich einen dauerhaften Kontakt zwischen Substratoberfläche und Beschichtung zu gewährleisten. Es können auch biologisch abbaubare oder natürliche Polymere verwendet werden, die über eine gewisse Klebrigkeit verfügen.

Offenbart ist auch eine leitfähige Zusammensetzung zur Erzeugung von Wärme aus elektrischer Energie (Heizfarbe), die gemäß den in den vorigen oder nachfolgenden Ausführungsformen beschriebenen Verfahren herstellbar ist.

### KURZE BESCHREIBUNG DER FIGUREN

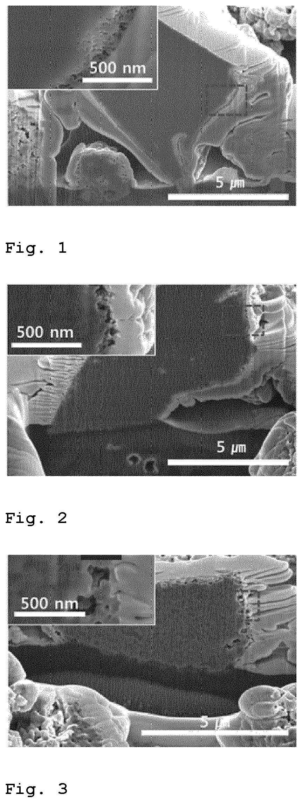

FIG. 1 zeigt eine erste elektronenmikroskopische Aufnahme einer durch einen ersten Querschnitt einer ersten erfindungsgemäßen Beschichtungszusammensetzung.
FIG. 2 zeigt zweite elektronenmikroskopische Aufnahme einer durch einen zweiten Querschnitt der ersten erfindungsgemäßen Beschichtungszusammensetzung.
FIG. 3 zeigt eine elektronenmikroskopische Aufnahme einer durch einen dritten Querschnitt der ersten erfindungsgemäßen Beschichtungszusammensetzung.
Fig. 4 zeigt die Retention der elektrischen Kapazität der ersten erfindungsgemäßen Beschichtungszusammensetzung.

### DETAILLIERTE BESCHREIBUNG DER ERFINDUNG

Die erfindungsgemäß hergestellte Zusammensetzung kann in Form von expandierten Partikeln vorliegen. Dabei können die Partikel eine Schüttdichte zwischen 0,01 kg/L und 0,1 kg/L, bevorzugt zwischen 0,02 kg/L und 0,05 kg/L aufweisen. Die erfindungsgemäß hergestellten Partikel können Poren mit Größen von 10 µm - 100 µm aufweisen.

Zur Herstellung der expandierten Partikel wird die durch Stromzufuhr gebildete Interkallationsverbindung mit Wasser ausgewaschen, die ausgewaschenen Partikel der Interkallationsverbindung getrocknet und einer thermischen Behandlung unterzogen, bei der der Graphit expandiert. Für die Expansion sind werden bevorzugt Temperaturen von 130°C oder höher, besonders bevorzugt Temperaturen von 150°C bis 260°C, insbesondere 150°C bis 180°C angewendet.

Als Matrixpolymere, die auch als Binder bezeichnet werden, werden bevorzugt Thermoplaste oder Harze verwendet. Geeignete Polymere umfassen, sind jedoch nicht beschränkt auf: Polyamide wie Polyamid 6 oder Polyamid 12; Acrylpolymere wie Polybutylacrylat (PBA) oder Polyethylacrylat (PEA); und Epoxyharze. Zweck der Matrixpolymere ist es vornehmlich einen dauerhaften Kontakt zwischen Substratoberfläche und Beschichtung zu gewährleisten. Daher können zu diesem Zweck auch biologisch abbaubare oder natürliche Polymere verwendet werden, die über eine gewisse Klebrigkeit verfügen.

Ebenfalls offenbart ist ein Substrat, das auf einer Oberfläche davon mit Partikeln der erfindungsgemäß hergestellten leitfähigen Zusammensetzung beschichtet ist. Hierbei können die Partikel in einer Polymermatrix verteilt vorliegen.

Die Beschichtung kann auf jegliche Weise stattfinden, beispielsweise durch Auftragen mittels eines Pinsels oder eines Spachtels, durch Sprühbeschichten oder Tauchbeschichten, und anschließender Trocknung der Beschichtung. In die Beschichtung werden vor vollständiger Trocknung mindestens zwei Drähte, bevorzugt Kupferdrähte eingebracht, die zur Durchleitung elektrischer Energie als Anode bzw. Kathode wirken. Die Dicke der Beschichtung auf dem Substrat beträgt bevorzugt 10 µm bis 40 µm. Dabei wird bevorzugt ein Flächenwiderstand von 10 Ohm bis 20 Ohm erreicht.

Die erfindungsgemäß hergestellte Zusammensetzung ist in sich selbst Stromleitend und zeigt hervorragende Eigenschaften in der Umwandlung von Strom in Wärmeleistung. Sie wird bevorzugt in Niedervolt-Applikationen verwendet, kann aber auch in Wechselvolt-Anwendung verwendet werden. Bevorzugt wird die Zusammensetzung bzw. das Heizsystem, das eine auf einem Substrat beschichtete Zusammensetzung umfasst, in 24V/48V-Gleichstrom Anwendungen verwendet. Die so beschichteten Substrate können damit sehr effizient als Heizung für Oberflächen und Räume verwendet werden.

### BEISPIELE

### Beispiel 1:

In einen Elektrolysator, der eine Anodenarbeitskammer aufweist, die zwischen der Stromabführung der Anode und einem beweglichen Kolben mit einem Diaphragma angeordnet ist, sowie eine im Elektrolyt oberhalb des Kolbens angeordnete Kathode, wurden 25 ml 58%-ige HNO₃ und 10 g natürlichen Graphit mit folgender Partikelgrößenzusammensetzung: 80% 200-290 µm und 20% weniger als 200 µm gegen. Dazu wurden 10 g Kaliumwasserglas-Lösung zugefügt. Es wurde eine anodische Behandlung des Graphits nach der potentiostatischen Verfahrensweise vorgenommen. Auf Stufe (b) (Aktivierung der Oberfläche) wurde im Laufe von 15 s ein Potential E_{b} = 2,1 V vorgegeben. Danach wurde Stufe (c) der elektrochemischen Behandlung zur Erzeugung von GEV beim Potential E_{c} = 1,75 V für 5 Stunden bei Q = 400 mA·h/g Graphit durchgeführt. Der Druck auf den Kolben betrug 0,2 kg/cm². Das erhaltene Produkt wurde mit Wasser ausgewaschen, getrocknet und bei 200°C thermisch behandelt. Es wurde ein in Kaliumwasserglas eingebetteter expandierter Graphit (Dispersions-Graphit) mit einer Schüttdichte von 1,7 g/l erhalten.

### Beispiel 2:

Es wurde eine Mischung aus natürlichem Graphit und Wasserglas wie in Beispiel 1 beschrieben hergestellt, wobei jedoch Graphitpulver mit einer durchschnittlichen Teilchengröße von 200 µm verwendet wurde. Die anodische Behandlung wurde in Säure mit einer Konzentration von 35 bis 40% in zwei Stufen, mit Q von 300 bis 420 mA·h/g Graphit und Temperaturen der Schaumbildung von 200 bis 250°C durchgeführt.

### Beispiel 3:

In die Arbeitskammer eines Elektrolysators, die zwischen der Anode und der einen dicht anliegenden Separator aus einem Polypropylengewebe aufweisenden Kathode angeordnet ist, wurden 2 kg einer Mischung von Graphit mit 80%-iger Schwefelsäure gegeben, die in einem Verhältnis von 1:1,6 genommen werden. Dazu wurden 1 kg Kaliumwasserglas-Lösung zugefügt.

Die Graphitsuspension wurde nach dem galvanostatischen Verfahrensweise anodisch behandelt. Stufe (b) (Aktivierung der Oberfläche) wurde unter einer Stromeinwirkung von 160 mA/g Graphit bis zur Erreichung des Anodenpotentials E_{b}= 2,3 V durchgeführt (im Laufe von ungefähr 2 Stunden), danach unter Stromverminderung bis auf ungefähr 80 mA/g Graphit wurde Stufe (c) (Bildung von GEV) durchgeführt. Die Spannung am Elektrolysator änderte sich während des Synthesenprozesses in den Grenzen von 3,5-4,5 V. Die Gesamtzeit der Behandlung betrug 9 Stunden, Q = 450 m·Ah/g Graphit. Der Druck auf den Kolben betrug 0,2 kg/cm².

Anschließend wurde das erhaltene Produkt mit Wasser ausgewaschen, getrocknet und bei 250°C thermisch behandelt. Es wurde ein Dispersions-Graphit mit einer Schüttdichte von ca. 1,6 g/l erhalten.

### Beispiel 4:

Die Anodenbehandlung der Graphitsuspension in 70 %-iger Schwefelsäure, die in einem Verhältnis von 1:1,6 genommen werden, wurde in Übereinstimmung mit Beispiel 3 durchgeführt. Bei der Erreichung des Potentials von 2,1 V wurde die Strommenge verringert, Stufe (c) wurde bei E = 1,8 V begonnen. Die Gesamtzeit der Behandlung wird auf 10 Stunden erhöht, Q = 520 mA·h/g Graphit.

Anschließend wurde das erhaltene Produkt mit Wasser ausgewaschen, getrocknet und bei 200°C thermisch behandelt. Es wurde ein Dispersions-Graphit mit einer Schüttdichte von 2,0 bis 2,20 g/l erhalten.

### Beispiel 5:

Die Anodenbehandlung der Graphitsuspension in 60 %-iger Schwefelsäure, die in einem Verhältnis von 1:1,5 genommen werden, wurde in Übereinstimmung mit Beispiel 3 durchgeführt, aber der Anfangsstrom der Polarisation betrug auf der Stufe der Aktivierung 80 mA/g Graphit, und bei der Erreichung des Potentials von 1,9-2,0 V wurde die Strommenge verringert. Danach wurde die Behandlung bei E = 1,7 V mit einem Strom von 40 mA/g Graphit durchgeführt.

Die Gesamtzeit der Behandlung wurde auf 12 Stunden erhöht, Q = 480-500 mA·h/g Graphit. Anschließend wurde das erhaltene Produkt mit Wasser ausgewaschen, getrocknet und bei 200°C thermisch behandelt. Es wurde ein Dispersions-Graphit mit einer Schüttdichte von 2,2 g/l erhalten.

### Beispiel 6:

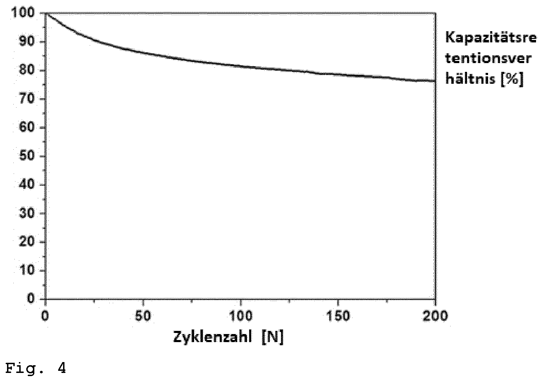

Die elektrische Kapazität einer ersten erfindungsgemäßen Beschichtungszusammensetzung wurde in mehreren Zyklen bestimmt. Die relative Abnahme der elektrischen Kapazität über die Zyklen ist in Fig. 4 dargestellt.

## Patentansprüche

1. Verfahren zur Herstellung einer leitfähigen Zusammensetzung zur Erzeugung von Wärme aus elektrischer Energie (Heizfarbe), bei dem eine Mischung aus Graphit und einem Silikatsalz in einem wässrigen Lösungsmittel hergestellt wird, die Mischung zur Aktivierung der Oberfläche und Bildung einer Interkallationsverbindung durch Anlegen einer elektrischen Spannung elektrolysiert wird und das Reaktionsprodukt der Elektrolyse von der Reaktionslösung abgetrennt wird.

2. Verfahren nach Anspruch 1, wobei der Mischung eine Stromgesamtmenge von mindestens 200 mA·h/g, bezogen auf den Gewichtsgehalt an Graphit, bevorzugt im Bereich von 300 bis 600 mA·h/g, bezogen auf den Gewichtsgehalt an Graphit, zugeführt wird.

3. Verfahren nach Anspruch 1 oder 2, wobei das angewendete elektrische Potential der Stromzufuhr im Bereich zwischen 1 V und 3 V liegt.

4. Verfahren nach einem der Ansprüche 1 bis 3, wobei die Stromzufuhr in potentiostatischer Arbeitsweise in Stufen erfolgt, wobei das angewendete elektrische Potential einer ersten Stufe das angewendete Potential einer zweiten Stufe mindestens um das 1,1-fache übersteigt.

5. Verfahren nach Anspruch 4, wobei das angewendete elektrische Potential einer ersten Stufe 2,1 V bis 2,5 V beträgt und in einer zweiten Stufe 1,5 bis 1,8 V beträgt.

6. Verfahren nach Anspruch 5, wobei die zugeführte Strommenge einer ersten Stufe 300 bis 500 mA·h/g, bezogen auf den Gewichtsgehalt an Graphit, bei einem Potential von bis zu 2,5 V, und einer zweiten Stufe 100 bis 160 mA·h/g V, bei einem Potential von bis zu 2,3 bezogen auf den Gewichtsgehalt an Graphit beträgt.

7. Verfahren nach einem der Ansprüche 1 bis 6, wobei das von der Reaktionslösung abgetrennte Reaktionsprodukt weiterhin getrocknet und durch Zufuhr von thermischer Energie expandiert wird.

8. Verfahren nach Anspruch 7, wobei für die Expansion Temperaturen von 130°C oder höher, besonders bevorzugt Temperaturen von 150°C bis 260°C, insbesondere 150°C bis 180°C angewendet werden.

## Claims

1. Method for producing a conductive composition for generating heat from electrical energy (heating paint), comprising producing a mixture of graphite and a silicate salt in an aqueous solvent, electrolyzing the mixture by applying an electrical voltage to activate the surface and to form an intercalation compound, and separating the reaction product of the electrolysis from the reaction solution.

2. Method according to Claim 1, comprising supplying to the mixture a total amount of power of at least 200 mA·h/g, relative to the weight content of graphite, preferably in the range of 300 to 600 mA·h/g, relative to the weight content of graphite.

3. Method according to Claim 1 or 2, comprising applying an applied electric potential of the power supply lying in the range of between 1 V and 3 V.

4. Method according to any one of Claims 1 to 3, wherein the power supply is accomplished in a potentiostatic operating mode in stages, wherein the applied electric potential of a first stage exceeds the applied potential of a second stage by at least 1.1 times.

5. Method according to Claim 4, wherein the applied electric potential of a first stage is 2.1 V to 2.5 V and the applied electric potential of a second stage is 1.5 to 1.8 V.

6. Method according to Claim 5, wherein the supplied amount of power of a first stage amounts to 300 to 500 mA·h/g relative to the weight content of graphite at a potential of up to 2.5 V, and the supplied amount of power of a second stage amount to 100 to 160 mA·h/g V, at a potential of up to 2.3 relative to the total weight of graphite.

7. Method according to any one of Claims 1 to 6, comprising further drying and expanding the reaction product separated from the reaction solution by supplying thermal energy.

8. Method according to Claim 7, wherein temperatures of 130°C or higher, particularly preferably temperatures of 150°C to 260°C, in particular 150°C to 180°C are applied for the expansion.

## Revendications

1. Procédé de fabrication d'une composition conductrice aux fins de production de chaleur à partir d'énergie électrique (peinture chauffante), selon lequel un mélange de graphite et d'un sel de silicate est créé dans un solvant aqueux, le mélange est électrolysé par application d'une tension électrique, en vue de l'activation de la surface et de la formation d'un composé d'intercalation, et le produit de réaction de l'électrolyse est séparé de la solution réactionnelle.

2. Procédé selon la revendication 1, selon lequel on apporte au mélange une quantité totale de courant d'au moins 200 mA·h/g, rapportée à la teneur en poids de graphite, de préférence dans la plage allant de 300 à 600 mA·h/g, rapportée à la teneur en poids de graphite.

3. Procédé selon la revendication 1 ou 2, selon lequel le potentiel électrique appliqué de l'alimentation en courant se situe dans la plage comprise entre 1 V et 3 V.

4. Procédé selon l'une des revendications 1 à 3, selon lequel l'alimentation en courant s'effectue selon un mode de fonctionnement potentiostatique par paliers, où le potentiel électrique appliqué d'un premier palier dépasse d'au moins 1,1 fois le potentiel appliqué d'un deuxième palier.

5. Procédé selon la revendication 4, selon lequel le potentiel électrique appliqué d'un premier palier est de 2,1 V à 2,5 V et correspond à 1,5 à 1,8 V sur un deuxième palier.

6. Procédé selon la revendication 5, selon lequel la quantité de courant apportée d'un premier palier est de 300 à 500 mA·h/g, rapportée à la teneur en poids de graphite, pour un potentiel allant jusqu'à 2,5 V, et celle d'un deuxième palier est de 100 à 160 mA·h/g V, pour un potentiel allant jusqu'à 2,3 V, rapportée à la teneur en poids de graphite.

7. Procédé selon l'une revendications 1 à 6, selon lequel le produit de réaction séparé de la solution réactionnelle est ensuite séché et expansé par apport d'énergie thermique.

8. Procédé selon la revendication 7, selon lequel on applique pour l'expansion des températures de 130 °C ou plus, de manière particulièrement avantageuse des températures allant de 150 °C à 260 °C, et notamment allant de 150 °C à 180 °C.
